# EUROPÄISCHE PATENTANMELDUNG

(11) **EP 2 179 896 A2**
(43) Veröffentlichungstag der Anmeldung: **28.04.2010**
(21) Anmeldenummer: 09172663.8
(22) Anmeldetag: 09.10.2009
(51) Int. Cl.: B60R 16/03

(54) **Vorrichtung zum Ausgleich von Spannungsunterschieden, insbesondere in einem Kraftfahrzeug**

(30) Priorität: 24.10.2008 DE 102008053171
(71) Anmelder: Continental Automotive GmbH, 30165 Hannover (DE)
(72) Erfinder: Hellwig, Hans-Peter, 93128 Regenstauf (DE); Meyer, Jörg, 93083 Obertraubling (DE); Schumann, Daniel, 93138 Lappersdorf/Baiern (DE)

(57) **Zusammenfassung**

Die Erfindung betrifft eine Vorrichtung (11) zum Ausgleich von Spannungsunterschieden umfassend
- einen Mikrokontroller (12),
- einen Spannungswandler (14),
- einen Pulsweitenmodulations-Kontroller (16),
- ein Spannungsmessgerät-In (15), das eine Eingangsspannung (Vin) des Spannungswandlers (14) misst und den Messwert an den Mikrokontroller (12) übermittelt,
- einen Ausgangsspannungsteiler (21), der eine Ausgangsspannung (Vout) des Spannungswandlers (14) misst, und
- ein Spannungsmodulator (19), der eine durch den Mikrokontroller (12) anliegende Spannung moduliert,
- ein Bauelement (18), wobei die an dem Ausgangsspannungsteiler (21) anliegende Ausgangsspannung (Vout) und die von dem Spannungsmodulator (19) modulierte Spannung durch das Bauelement (18) arithmetisch verknüpft werden und die verknüpfte Spannung als Eingangssignal am Pulsweitenmodulations-Kontroller (16) anliegt,
- und wobei dem Pulsweitenmodulations-Kontroller (16) durch den Mikrokontroller (12) eine Spannungsanstiegsrate vorgegeben ist, so dass die Ausgangsspannung (Vout) in einer vorgegebenen Zeit ansteigt.

Die vorliegende Erfindung eignet sich besonders für die Regelung der Bordnetzspannung in Kraftfahrzeugen.

## Beschreibung

Die Erfindung betrifft eine Vorrichtung und ein Verfahren zum Ausgleich von Spannungsunterschieden.

Die immer größer werdende Problematik der Energie- und Schadstoffreduzierung in der Kraftfahrzeugindustrie, führt zum verstärkten Einsatz von neuen Technologien. Weit verbreitet ist inzwischen die sogenannte Start- Stopp Funktion. Hier wird ein Fahrzeug, wann immer es möglich ist, abgeschaltet und bei Bedarf wieder gestartet. Dieser Startvorgang führt zum Abfall der Bordnetzspannung aufgrund des hohen Energiebedarfs des Starters. Dieser Spannungsabfall kann zum Ausfall unter anderem des Radios und/oder des Navigationssystems und auch zum Abdunkeln der Beleuchtung, z.B. bei den Instrumenten führen. Dieser Spannungsabfall bzw. die daraus resultierenden Effekte werden üblicherweise durch den Einsatz eines Spannungsstabilisators reduziert. Damit kann die Spannung für bestimmte Geräte fast konstant gehalten werden. Sollte die Bordspannung abfallen, wird der Stabilisator aktiviert.

Bei diesem Umschalten kommt es aber systembedingt trotzdem zu Spannungsänderungen. Das zeigt sich durch ein Flackern in der angeschlossenen Beleuchtungseinrichtung und wodurch für den Fahrer des Kraftfahrzeugs das Ablesen der Anzeigen erwert wird und er im schlimmsten Fall durch dieses Flackern irritiert wird.

Aus der DE 10 2004 036 563 A1 ist eine Spannungsstabilisierung, die insbesondere im Zusammenhang mit der Spannungsversorgung für elektrische Verbraucher in einem Kraftfahrzeug eingesetzt wird, bekannt. Mittels eines seriell geschalteten Spannungswandlers wird hier eine Zusatzspannung erzeugt, die einer Bordnetzspannung durch Zuführung zum spannungskritischen Verbraucher überlagert werden kann, so dass Spannungsschwankungen, wie sie beim zu- und Abschalten von elektrischen Hochstrom-Verbrauchern entstehen ausgeglichen werden können.

Aus der DE 10 2005 057 306 A1 ist ein Verfahren und eine Vorrichtung zur Spannungsstabilisierung eines Gleichspannungs-Bordnetzes bekannt. Die erforderliche elektrische Leistung für den spannungskritischen Verbraucher, insbesondere für Lampen, wird dabei mit Hilfe eines seriell geschalteten Spannungswandlers so erzeugt, dass nur ein Bruchteil, beispielsweise etwa ein Sechstel der Leistung eines Spannungswandlers, der die Lichttechnik direkt versorgt, benötigt wird.

Der vorliegenden Erfindung liegt die Aufgabe zugrunde, eine Vorrichtung zum Ausgleich von Spannungsunterschieden bereitzustellen wodurch eine sichtbare Helligkeitsänderung von Anzeigen verhindert wird.

Diese Aufgabe wird erfindungsgemäß durch eine Vorrichtung mit den Merkmalen des Anspruches 1, ein Verfahren mit den Merkmalen des Anspruchs 6 und ein Kraftfahrzeug gemäß dem Anspruch 8 gelöst. Vorteilhafte Aus- und Weiterbildungen, welche einzeln oder in Kombination miteinander eingesetzt werden können sind Gegenstand der abhängigen Ansprüche.

Die Erfindung betrifft in einem ersten Aspekt eine Vorrichtung zum Ausgleich von Spannungsunterschieden umfassend
- einen Mikrokontroller,
- einen Spannungswandler,
- einen Pulsweitenmodulations-Kontroller,
- ein Spannungsmessgerät-In, das eine Eingangsspannung des Spannungswandlers misst und den Messwert an den Mikrokontroller übermittelt,
- einen Ausgangsspannungsteiler, der eine Ausgangsspannung des Spannungswandlers misst, und
- ein Spannungsmodulator, der eine durch den Mikrokontroller anliegende Spannung moduliert, wobei
- ein Bauelement, wobei die an dem Ausgangsspannungsteiler anliegende Ausgangsspannung und die von dem Spannungsmodulator modulierte Spannung durch das Bauelement arithmetisch verknüpft werden und als Eingangssignal am Pulsweitenmodulations-Kontroller anliegt,
- und wobei dem Pulsweitenmodulations-Kontroller durch den Mikrokontroller eine Spannungsanstiegsrate vorgegeben ist, so dass die Ausgangsspannung in einer vorgegebenen Zeit ansteigt.

In einer bevorzugten Ausgestaltung umfasst der Spannungsmodulator ein RC-Glied und eine Diode.

In einer weiteren bevorzugten Ausgestaltung ist das Bauelement als direkte Kabelverbindung ausgebildet wodurch die verknüpfte Spannung aus einer Addition der Ausgangsspannung und der von dem Spannungsmodulator modulierten Spannungen als Eingangssignal am Pulsweitenmodulations-Kontroller anliegt.

In einer weiteren bevorzugten Ausgestaltung umfasst das Bauelement einen Vergleicher.

In einer weiteren bevorzugten Ausgestaltung umfasst die Vorrichtung ein Spannungsmessgerät-Out-Mikro zur Messung der Ausgangsspannung, wobei die gemessenen Werte der Ausgangsspannung an den Mikrokontroller übermittelbar sind.

In einem zweiten Aspekt betrifft die Erfindung ein Verfahren zum Ausgleich von Spannungsunterschieden mit den folgenden Verfahrensschritten:
- Messung der Eingangsspannung durch ein Spannungsmessgerät-In, das den Messwert anschließend an einen Mikrokontroller übermittelt,
- Messung der Ausgangsspannung durch einen Ausgangsspannungsteiler und
- Modulation einer durch den Mikrokontroller am Spannungsmodulator anliegenden Spannung,
- Arithmetische Verknüpfung der an dem Ausgangsspannungsteiler anliegende Ausgangsspannung mit der von dem Spannungsmodulator modulierte Spannung durch das Bauelement, so dass die verknüpfte Spannung als Eingangssignal am Pulsweitenmodulations-Kontroller anliegt, und
- Vorgabe einer Spannungsanstiegsrate durch den Mikrokontroller an den Pulsweitenmodulations-Kontroller, so dass die Ausgangsspannung in einer vorgegebenen Zeit ansteigt.

In einer bevorzugten Ausgestaltung wird die Spannungsanstiegsrate durch den Mikrokontroller derart gewählt, dass die Ausgangsspannung linear ansteigt.

Ferner umfasst die Erfindung ein Kraftfahrzeug mit einer Energieversorgung, zumindest einem Verbraucher und einer Vorrichtung zum Ausgleich von Spannungsunterschieden zwischen einer Eingangsspannung, die durch die Energieversorgung bereitgestellt wird und einer Ausgangsspannung, wobei die Ausgangsspannung als Spannungsversorgung für den zumindest einen Verbraucher im Kraftfahrzeug dient.

Weitere Einzelheiten und Vorteile der Erfindung werden in Bezugnahme auf die beigefügte Abbildung erläutert.

Darin zeigen schematisch:
- Fig. 1: Eine Vorrichtung 11 zur Spannungsstabilisierung;
- Fig. 2: eine Vorrichtung 11 nach Figur 1 mit einer Kontrollfunktion durch den Mikrokontroller 12;
- Fig. 3: eine Vorrichtung 11 mit einem Vergleicher 20;
- Fig. 4: eine Vorrichtung nach Figur 3 mit einer zusätzlichen Kontrollfunktion durch den Mikrokontroller 12;
- Fig. 5: Spannungsverläufe; und
- Fig. 6: ein Kraftfahrzeug (30).

Bei der nachfolgenden Beschreibung einer bevorzugten Ausführungsform der vorliegenden Erfindung bezeichnen gleiche Bezugszeichen gleiche oder vergleichbare Komponenten.

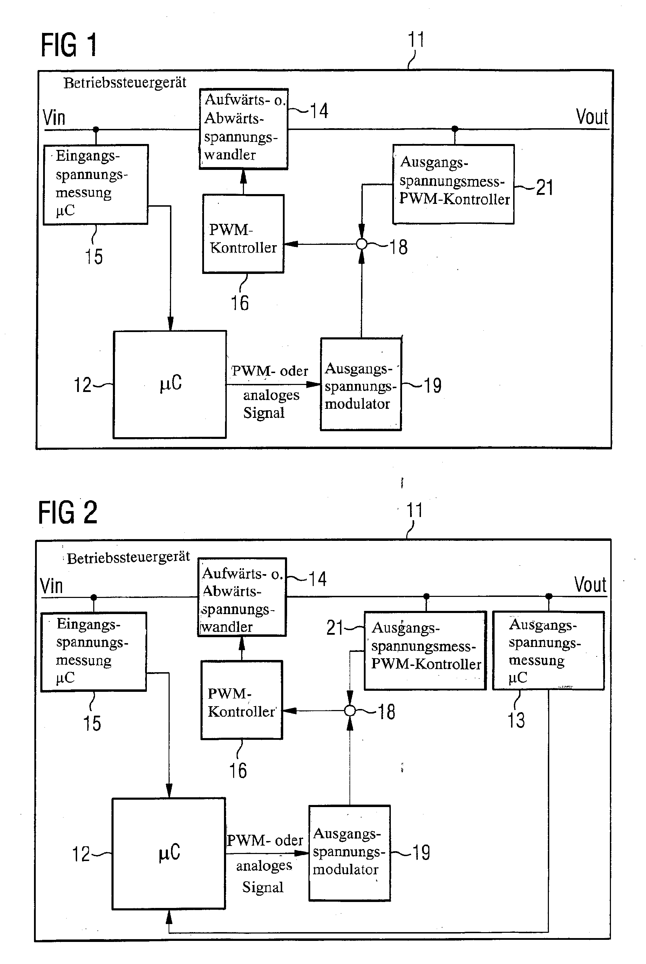

Figur 1 zeigt schematisch eine Vorrichtung 11 zur Spannungsstabilisierung. Die Vorrichtung 11 umfasst einen Pulsweitenmodulations-Kontroller (PMW-Kontroller) 16 und einen Spannungswandler 14. Hierbei können der PMW-Kontroller 16 und der Spannungswandler 14 auch in einem Gerät integriert sein. Am Spannungswandler 14 liegt eine Eingangsspannung Vin an. Ferner umfasst die Vorrichtung 11 einen Mikrokontroller 12, ein Spannungsmessgerät-In 15, ein Bauelement 18, einen Spannungsmodulator 19 und einen Ausgangsspannungsteiler 21, der eine Messfunktion für die Ausgangsspannung Vout und einen PWM-Kontroller aufweist

Weil die Ausgangsspannung Vout, auf welche der Spannungswandler 14 regeln soll, im vorliegenden Ausführungsbeispiel über einen nicht variabel einstellbaren Spannungsteiler gemessen wird, ist damit die Ausgangsspannung Vout, die der Spannungswandler 14 ausgibt festgelegt. Die von dem Spannungswandler 14 ausgehende Ausgangsspannung Vout hängt wiederum vom Eingangssignal des PWM-Kontrollers 16 ab.

Der PWM-Kontroller 16 stellt die Ansteuerimpulse für den Spannungswandler 14 zur Verfügung. Der PWM-Kontroller 16 erhält seine Kennwerte zur Berechnung der Ansteuerimpulse für den Spannungswandler 14 wiederum von dem Bauelement 18. Bei dem Bauelement 18 wird zur gemessenen und damit anliegenden Ausgangsspannung Vout eine analoge Spannung arithmetisch zusammengeführt wird, beispielsweise durch Addition. Diese zusätzliche analoge Spannung wird durch den Mikrokontroller 12 initiiert.

Der Messwert der Eingangsspannung Vin, wird durch das Spannungsmessgerät-In 15 gemessen und an den Mikrokontroller 12 übermittelt. Ein vom Mikrokontroller 12 erzeugtes PWM-Signal wird über den Spannungsmodulator 19, beispielsweise ein RC Glied mit nachfolgender Diode, in eine analoge Spannung umgewandelt und der Spannung der Ausgangsspannung Vout, die an dem Ausgangsspannungsteiler 21 anliegt, an dem Bauelement 18 hinzu addiert. Dabei wird der Ausgangsspannungsteiler 21 für den gewünschten Mindestwert der zu erreichenden Ausgangsspannung Vout ausgelegt. In Abhängigkeit von dem Verhältnis der PWM ergibt sich so eine andere Spannung auf welche der PWM-Kontroller 16 regelt. Durch diese Manipulation der am PWM-Kontroller 16 anliegenden Sollgröße für die Ausgangsspannung Vout kann die somit vorher statische Ausgangsspannung Vout des Spannungswandlers 14 in einem bestimmten Maß angehoben werden. Mit dem Mikrokontroller 12 wird die Differenz der Eingangsspannung Vin zur neuen Ausgangsspannung Vout ermittelt und in jeweils gleich große zeitliche Spannungswerte eingeteilt. Da der Spannungswandler 14 weiterhin auf den vorgegebenen Sollwert der Ausgangsspannung Vout regelt, wird mit der zusätzlichen analogen Spannung erreicht, dass beim PWM-Kontroller 16 ein höherer Spannungswert anliegt, als die aktuelle Ausgangsspannung Vout tatsächlich ist. Dadurch verringert sich der durch den Spannungswandler 14 nachzuregelnde Spannungsunterschied. Der Mikrokontroller 12 gibt zudem eine fest vorgegebene Spannungsanstiegsrate an den PWM-Kontroller 16 weiter. Es wird also mit Hilfe des Mikrokontrollers 12 erreicht, dass beim Einschalten des Spannungswandlers 14 die Ausgangsspannung Vout des Spannungswandlers 14 nicht sofort auf einen viel zu großen oder kleinen Wert springt. Die Ausgangsspannung Vout steigt aufgrund der von dem Mikrokontroller 12 vorgegebenen Spannungsanstiegsrate in einer fest vorgegebenen Zeit an. Diese Spannungsanstiegsrate kann linear sein.

Figur 2 zeigt eine Vorrichtung 11 (wie in Figur 1) mit einem Spannungsmessgerät-Out-Mikro 13 zur Messung der Ausgangsspannung Vout, wobei der Messwert an den Mikrokontroller 12 übermittelt wird. Der Mikrokontroller 12 vergleicht die Werte des Spannungsmessgeräts-In 15 mit dem des Spannungsmessgerät-Out-Mikro 13 und gibt, wenn Vin kleiner ist als Vout ein Signal an den PWM-Kontroller 16. Der Mikrokontroller 12 kann hier über eine entsprechende Ein- und Ausschaltfunktion den PWM-Kontroller 16 ansprechen. Diese zusätzliche Überwachung der Eingangs- und Ausgangsspannung Vin und Vout durch den Mikrokontroller 12 ist insbesondere dann von Vorteil wenn fast keine Eingangsspannung Vin mehr vorhanden ist und der Spannungswandler 14 die Spannung überproportional nach oben zu regeln versucht, was zu einer Überbeanspruchung des Spannungswandlers 14 führen kann. Der Mikrokontroller 12 sendet das entsprechende Signal an den PWM-Kontroller 16, so dass eine kontrollierte Spannungswandlung erfolgt.

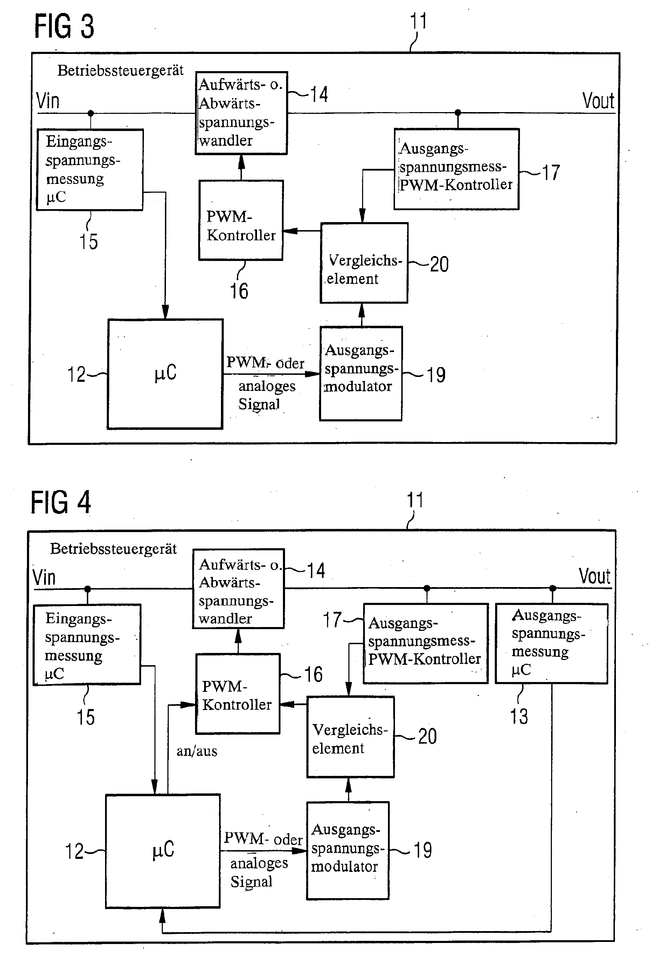

Figur 3 zeigt eine Vorrichtung 11 wie in Figur 2 wobei das Bauelement 18 als Vergleicher 20 ausgebildet ist. Es wird zusätzlich eine analoge Spannung zur gemessenen Ausgangsspannung Vout addiert, welche aber über einen Vergleicher dem PWM Kontroller 16 zugeführt wird. Bei diesem Vergleicher 20 wird durch das analoge Signal welches aus dem PWM Signal des Mikrokontrollers 12 erzeugt wurde, ein Spannungsreferenzwert eingestellt. Dadurch kann der Sollwert, welchen der PWM Kontroller 16 benötigt so verändert werden, dass die Ausgangsspannung Vout um einen bestimmten Wert positiv oder auch negativ verändert werden kann. Das heißt, die Ausgangsspannung Vout, welche durch den Spannungswandler 14 erzeugt wird, kann im Gegensatz zur Vorrichtung 11 aus Figur 2 auch verringert werden. Mit dieser Umsetzung wird eine höhere Dynamik der Änderung der Ausgangsspannung Vout erreicht.

Figur 4 zeigt eine Vorrichtung 11 wie in Figur 3 mit einem zusätzlichen Spannungsmessgerät-Out-Mikro 13 zur Messung der Ausgangsspannung Vout, wobei der Messwert an den Mikrokontroller 12 übermittelt wird. Der Mikrokontroller 12 vergleicht die Werte des Spannungsmessgeräts-In 15 mit dem des Spannungsmessgerät-Out-Mikro 13 und gibt, wenn Vin kleiner ist als Vout ein Signal an den PWM-Kontroller 16. Der Mikrokontroller 12 kann hier über eine entsprechende Ein- und Ausschaltfunktion den PWM-Kontroller 16 ansprechen. Diese zusätzliche Überwachung der Eingangs- und Ausgangsspannung Vin und Vout durch den Mikrokontroller 12 ist insbesondere dann von Vorteil wenn fast keine Eingangsspannung Vin mehr vorhanden ist und der Spannungswandler 14 die Spannung überproportional nach oben zu regeln versucht, was zu einer Überbeanspruchung des Spannungswandlers 14 führen kann. Der Mikrokontroller 12 sendet das entsprechende Signal an den PWM-Kontroller 16, so dass eine kontrollierte Spannungswandlung erfolgt.

Der Vorteil der Vorrichtung 11 wie er in den Figuren 3 bis 6 beschrieben ist liegt darin, dass die Eingangsspannung Vin, welche die Bordnetzspannung sein kann, durch das ein Spannungsmessgerät-In 15 ständig überwacht wird und der PWM-Kontroller 16 des Spannungswandlers 14 so angesteuert wird, dass die Spannungsänderung der Ausgangsspannung Vout, die am PWM-Kontroller 16 anliegt mit einer festzulegenden Anstiegszeit ausgegeben wird. Der Spannungssprung wird soweit verlangsamt, dass er für das menschliche Auge nicht mehr sichtbar ist.

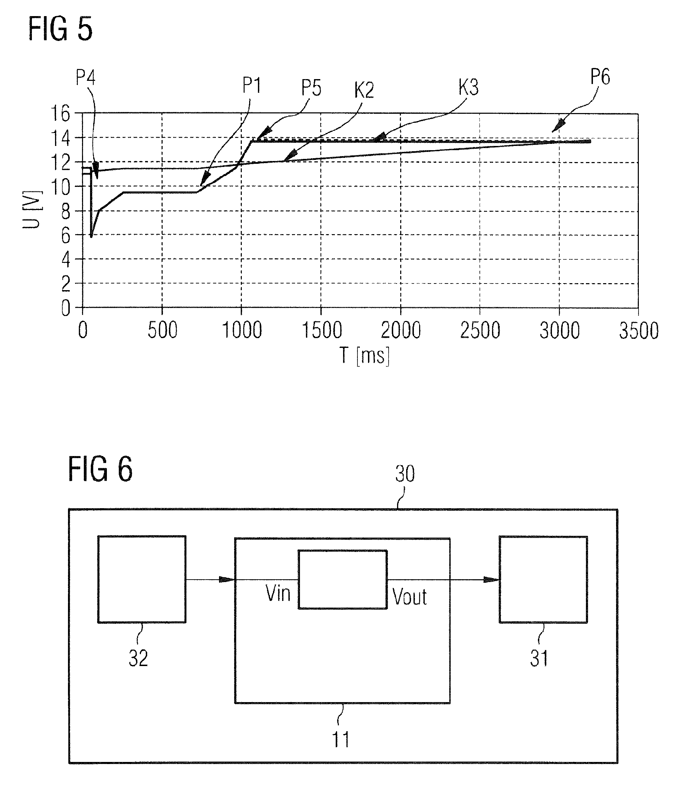

Figur 5 zeigt beispielhaft Spannungsverläufe nach einem Spannungsabfall mit Vorrichtungen 11.

Ein Kurvenverlauf, bei dem eine zu den Figuren 1 und 2 vergleichbare Vorrichtung 11 zum Einsatz kommt ist mit der Kurve 1 dargestellt. Ein Spannungsabfall, beispielsweise beim Startvorgang des Fahrzeugs bei P4 wird durch einen Spannungswandler 14 bis zu einem konstanten Wert P6 hochgeregelt. Dadurch entstehen auch kurzzeitig Spannungsänderungen P4, P5, die groß genug sind, dass diese sich bei Beleuchtungsanzeigen im Fahrzeug als Flackern der Lichtintensität wahrnehmbar sind. Mit den erfindungsgemäßen Vorrichtungen 11 wird eine konstante Anstiegszeit wie in Kurve K2 dargestellt erreicht, so dass kein Flackern erkennbar ist.

Ein ähnlicher Effekt tritt beim Anlauf des Motors ein, Zeitpunkt P5. Hier wird der Generator recht schnell eine "Normal-Spannung" bereitstellen. Das führt auch wieder zum Flackern der angeschlossenen Verbraucher, vgl. gepunktete Kurve K3. Die Kurve K2 entsprechend der Erfindung verbleibt dabei hingegen beim festgelegten gleichmäßigen Anstieg. Erst wenn die Kurve K2 die vorherrschende Bordspannung bei P6 trifft, wird der Spannungswandler 14 abgeschaltet. Die Erfindung ermöglicht also die stabilisierte Versorgung zumindest eines Verbrauchers, ohne dass es dabei zu ungewöhnlichen Reaktionen, wie z.B. Licht-Flackern kommt. Ein Verbraucher kann beispielsweise die Tachoanzeige oder die Temperaturanzeige sein.

Figur 6 zeigt schematisch ein Kraftfahrzeug 30, umfassend eine Vorrichtung 11 (z.B. wie zuvor beschrieben) zum Ausgleich von Spannungsunterschieden zwischen einer Eingangsspannung Vin, die durch eine Energieversorgung 32, hier beispielhaft eine Batterie 32 bereitgestellt wird und einer Ausgangsspannung Vout, wobei die Ausgangsspannung Vout als Spannungsversorgung für Verbraucher 31 im Kraftfahrzeug 30 dient. Diese Verbraucher 31 sind beispielsweise ein Navigationsgerät oder Beleuchtungseinrichtungen der Anzeigen.

Die vorliegende Erfindung eignet sich besonders für die Regelung der Bordnetzspannung in Kraftfahrzeugen.

## Patentansprüche

1. Vorrichtung (11) zum Ausgleich von Spannungsunterschieden umfassend
- einen Mikrokontroller (12),
- einen Spannungswandler (14),
- einen Pulsweitenmodulations-Kontroller (16),
- ein Spannungsmessgerät-In (15), das eine Eingangsspannung (Vin) des Spannungswandlers (14) misst und den Messwert an den Mikrokontroller (12) übermittelt,
- einen Ausgangsspannungsteiler (21), der eine Ausgangsspannung (Vout) des Spannungswandlers (14) misst, und
- ein Spannungsmodulator (19), der eine durch den Mikrokontroller (12) anliegende Spannung moduliert,
- ein Bauelement (18), wobei die an dem Ausgangsspannungsteiler (21) anliegende Ausgangsspannung (Vout) und die von dem Spannungsmodulator (19) modulierte Spannung durch das Bauelement (18) arithmetisch verknüpft werden und die verknüpfte Spannung als Eingangssignal am Pulsweitenmodulations-Kontroller (16) anliegt,
- und wobei dem Pulsweitenmodulations-Kontroller (16) durch den Mikrokontroller (12) eine Spannungsanstiegsrate vorgegeben ist, so dass die Ausgangsspannung (Vout) in einer vorgegebenen Zeit ansteigt.

2. Vorrichtung (11) nach Anspruch 1, **dadurch gekennzeichnet, dass** der Spannungsmodulator (19) ein RC-Glied und eine Diode umfasst.

3. Vorrichtung (11) nach Anspruch 1 oder 2, **dadurch gekennzeichnet, dass** das Bauelement (18) als direkte Kabelverbindung ausgebildet ist, wodurch die verknüpfte Spannung aus einer Addition der Ausgangsspannung (Vout) und der von dem Spannungsmodulator (19) modulierten Spannungen als Eingangssignal am Pulsweitenmodulations-Kontroller (16) anliegt.

4. Vorrichtung (11) nach Anspruch 1 oder 2, **dadurch gekennzeichnet, dass** das Bauelement (18) einen Vergleicher (20) umfasst.

5. Vorrichtung (11) nach einem der vorherigen Ansprüche, umfassend ein Spannungsmessgerät-Out-Mikro (13) zur Messung der Ausgangsspannung (Vout), wobei die gemessenen Werte der Ausgangsspannung (Vout) an den Mikrokontroller (12) übermittelbar sind.

6. Verfahren zum Ausgleich von Spannungsunterschieden mit den folgenden Verfahrensschritten:
- Messung der Eingangsspannung (Vin) durch ein Spannungsmessgerät-In (15), das den Messwert anschließend an einen Mikrokontroller (12) übermittelt,
- Messung der Ausgangsspannung (Vout) durch einen Ausgangsspannungsteiler (21) und
- Modulation einer durch den Mikrokontroller (12) am Spannungsmodulator (19) anliegenden Spannung,
- Arithmetische Verknüpfung der an dem Ausgangsspannungsteiler (21) anliegende Ausgangsspannung (Vout) mit der von dem Spannungsmodulator (19) modulierte Spannung durch das Bauelement (18), so dass die verknüpfte Spannung als Eingangssignal am Pulsweitenmodulations-Kontroller (16) anliegt, und
- Vorgabe einer Spannungsanstiegsrate durch den Mikrokontroller (12) an den Pulsweitenmodulations-Kontroller (16), so dass die Ausgangsspannung (Vout) in einer vorgegebenen Zeit ansteigt.

7. Verfahren nach Anspruch 6, **dadurch gekennzeichnet, dass** die Spannungsanstiegsrate durch den Mikrokontroller derart gewählt wird, dass die Ausgangsspannung (Vout) linear ansteigt.

8. Kraftfahrzeug (30), umfassend eine Energieversorgung (32) zumindest einen Verbraucher (31) und eine Vorrichtung (11) nach einem der Ansprüche 1 bis 5 zum Ausgleich von Spannungsunterschieden zwischen einer Eingangsspannung (Vin), die durch die Energieversorgung (32) bereitgestellt wird und einer Ausgangsspannung (Vout), wobei die Ausgangsspannung (Vout) als Spannungsversorgung für den zumindest einen Verbraucher (31) im Kraftfahrzeug (30) dient.
